# EUROPEAN PATENT APPLICATION

(11) **EP 1 878 520 A1**
(43) Date of publication of application: **16.01.2008**
(21) Application number: 05737318.5
(22) Date of filing: 26.04.2005
(51) Int. Cl.: B22D 46/00, B22C 9/00

(54) **METHOD FOR PREDICTING AND PREVENTING SHRINKAGE CAVITY OF IRON CASTING**

(71) Applicant: Kimura Chuzosho Co, LTD., Suntou-gun Shizuoka 4110905 (JP); Qualica INC., Tokyo 1350016 (JP); Ekk Japan Inc., Tochigi 329-0434 (JP)
(72) Inventor: KANNO, Toshitake, Shizuoka 4103205 (JP); KANG, Ilgoo, Shizuoka 4110031 (JP); MURAKAMI, Toshihiko, Osaka 5640051 (JP); KUBO, Kimio, Tochigi 329-0434 (JP)
(74) Representative: Waldren, Robin Michael
(86) International application number: PCT/JP2005/007886
(87) International publication number: WO 2006/117837

(57) **Abstract**

A method for predicting and preventing occurrence of shrinkage cavity in an iron casting of any of various shapes or in each part of an iron casting precisely prior to casting. The shape of an iron casting is approximated entirely or partially to a rectangular parallelepiped or a cube, to the sum of the two long sides is divided by the short side to determine a shape coefficient, and occurrence of shrinkage cavity is predicted by determining whether the value exceeds a predetermined value (determination coefficient) or not.

## Description

### Technical Field

The present invention relates to a method for predicting and preventing shrinkage cavity of an iron casting.

### Background Art

Various types of methods for predicting shrinkage cavity have been posed for many years. Typical examples thereof include an evaluating method proposed by Tivolinov of Russia and an evaluating method proposed by Niiyama. The former uses modulus which is a value obtained by dividing the volume of a casting by the surface area thereof. The latter uses a value obtained by dividing a temperature gradient G by the square root R of a cooling rate.

However, these methods for predicting shrinkage cavity can be effective for cast steel, nonferrous metal or the like having no expansion caused by the generation of graphite. However, the methods are not necessarily effective for cast iron caused by the generation of graphite.

Therefore, Yoshida et al. has proposed Patent Document 1 as a method for determining occurrence of shrinkage cavity of spheroidal graphite cast iron. This method measures eutectic crystal solidification times of the inside and surface of the casting, and determines whether the shrinkage cavity exists or not from the overlapping degree of the eutectic crystal solidification times, i.e.,the Massey degree. Patent Document 2 proposes a method for obtaining a solid phase rate from the number of grains and graphite diameter of graphite and using the solid phase rate for determining the shrinkage cavity.

The determining methods proposed by Yoshida et al. are useful to some extent for determining the tendency of the shrinkage cavity of the spheroidal graphite cast iron. However, it is difficult to predict the shrinkage cavity using such methods. This is because the shrinkage cavity occurs in a larger iron casting in these methods, which disagrees with the fact discovered by the present inventors that no correlation exists between the shrinkage cavity and the size of the product when the mold strength is sufficiently high.

A "hot spot method" using a solidification simulation has been usually employed as the method for predicting shrinkage cavity. This method focuses on easy occurrence of shrinkage cavity in a non-solidified metal part since molten iron cannot be resupplied to the non-solidified metal part when an island of molten iron broken from the other, i.e., loops (referred to as "hot spot" in an island of the non-solidifiedmetal surrounded by a metal having solidified circumference) having a closed temperature constant-temperature line or solidification line are formed in the casting in a solidification process. Since the cast steel and nonferrous metal having no expansion caused by the crystallization of graphite has an extremely high probability that the shrinkage cavity occurs in the "hot spot" part, the "hot spot method" has been widely used as a high-precision determining method. However, when the "hot spot" is formed in the cast iron having expansion caused by the crystallization of graphite, this part does not necessarily become the shrinkage cavity.

Patent Document 1: Japanese Patent Application Laid-Open No. 10-296385
Patent Document 2: Japanese Patent Application Laid-Open No. 05-96343

### Disclosure of Invention

### Problem to be Solved by the Invention

As the methods for preventing shrinkage cavity, a feeder head and a chiller etc. are used. As for the feeder head ordinary used is a method for calculating a modulus of a product and erecting a feeder head having a larger modulus than the modulus of the product. Therefore, there is a problem that the size of the feeder head is almost the same as that of the product, and the yield becomes extremely worse. Cast iron hardly causes occurrence of shrinkage cavity as compared with cast steel. For this reason, when the amount of the feeder head is lessened, the shrinkage cavity occurs, and after all, the shrinkage cavity occurs in many cases if the same feeder head as that of the cast steel is not erected. For the method for preventing shrinkage cavity using the chiller, the place of the shrinkage cavity can be moved by constructing the chiller, but the shrinkage cavity cannot be lost. This is because the cast iron has the complicated occurrence mechanism of the shrinkage cavity and the mechanism is not sufficiently resolved.

Various types of methods for predicting shrinkage cavity have been proposed as described in the prior art. However, the method for predicting shrinkage cavity, which is appropriate to the property of cast iron and has high accuracy, has not been established at present. Also, a method for preventing shrinkage cavity, which is efficiently appropriate to the property of cast iron, has not been proposed even if the method can predict the shrinkage cavity.

It is an object of the present invention to provide means for precisely predicting existence or nonexistence of occurrence of shrinkage cavity in a casting of any of various shapes or in each part of the casting, and capable of performing a suitable casting method and changing a product shape for the casting predicted to cause the occurrence of the shrinkage cavity or each part of the casting so that a sound casting can be obtained.

### Means for Solving the Problem

The present inventors investigated the existence or nonexistence of occurrence of shrinkage cavity and carried out various types of experiments such as solidification simulation and measurement of temperature for various casting products having different sizes, materials or shapes to resolve that the shrinkage cavity occurs in the casting product having what type of shape. The means will be illustrated using an example of a block of a rectangular parallelepiped. The present inventors have discovered that the occurrence of the shrinkage cavity is prevented regardless of the size of the casting when a value (herein, referred to as "shape coefficient") obtained by dividing the sum of two long sides of the rectangular parallelepiped by the length of a remaining short side is not more than a certain numerical value. The present inventors have discovered that the certain numerical value herein is about 8 in ordinary spheroidal graphite cast iron which contains no elements promoting the shrinkage cavity such as Cr and Mo, and also that the value changes as Cr or Mo increases.

The present inventors have also discovered that when the casting product has a shape which is not the rectangular parallelepiped block, the shape may be approximately considered to be the rectangular parallelepiped. For example, in the case of the spherical product, the shape may be considered as a cube with one side to which a sphere is inscribed being equal to the diameter of the sphere, and in the case of a product having a cylindrical shape, the shape may be considered as a rectangular parallelepiped of which two long sides are equal to the diameter of a circle. The shape may be considered as a rectangular parallelepiped obtained by developing the cylinder in the case of a doughnut-shaped cylinder having a hole therein. The present inventors have discovered that a product of a combination of various shapes may be considered by dividing the parts of the product.

As described above, the existence or nonexistence of the shrinkage cavity can be determined from only the shape of the product. Also, the present inventors have discovered that the occurrence of the shrinkage cavity can be predicted in each of closed elliptical loops as follows. Solidification analysis or the like is performed to obtain a shape coefficient of each of the closed elliptical loops in a solidification distribution chart obtained from a temperature distribution or a solidification time distribution in the solidification of the casting product, followed by determining whether the value is not more than 8.

The use of such a method can determine whether or not shrinkage cavity occurs in "hot spot" which is an island of molten iron broken from the other, i.e., loops having a closed temperature constant-temperature line or solidification line in the casting in the solidification process. Naturally, the shape coefficient may be determined as an elliptical sphere. However, the shape coefficient may be determined by approximating an elliptical sphere having a closed Rugby ball shape to the rectangular parallelepiped.

A method for determining the shape coefficient of each of the closed elliptical loops in the solidification simulation using a computer is as follows.

As one method, there is a method for measuring the size of an arbitrary elliptical loop on a screen by operation of a mouse or the like using a solidification distribution chart obtained from a temperature distribution or solidification time distribution due to solidification simulation to obtain a shape coefficient.

As the other method, there is used a method for specifying an arbitrary elliptical pool to determine a shape coefficient. For example, the whole solidification time is divided to a plurality of times, and the elliptical loop in arbitrary time of them is specified. This elliptical loop is composed by elements in the mesh cutting. It is determined how many elements exist in X, Y and Z directions of this mesh to determine a shape coefficient of the elliptical loop.

Examples of the other methods include a method for processing data of extracted arbitrary elliptical loop in another place to evaluate the shape and to calculate a shape coefficient.

Thus, many means can be considered as the method for determining a shape coefficient of an elliptical loop using a computer.

Of course, the industrial greatest worth of the present invention is that the shrinkage cavity can be predicted. The other worth thereof is that a method for preventing the shrinkage cavity is proposed. That is, the present inventors have discovered that occurrence of the shrinkage cavity is prevented by dividing a product so that a shape coefficient is set to not more than 8 using a chiller or a feeder head, or both the chiller and the feeder head.

The example of the rectangular parallelepiped will be illustrated. When a plate of 800 x 400 x 80 mm is used as an example, it is turned out that a shape coefficient of the plate is (800 + 400) /80 = 15 and the shrinkage cavity occurs when the shape coefficient is 8 or more. When the plate is divided into four by the chiller, the shape coefficient is (400 + 200)/80 = 7.5, and the shrinkage cavity does not occur when the shape coefficient is 8 or less. The phenomenon as the description could be observed even in the actual product test. As for the chiller available is a method for constructing a chiller directly brought into contact with molten iron. However, since one loop of blocked solidification need only to be divided into four, a method for constructing the chiller which is not directly brought into contact with the molten iron has also no problem. When the construction area of the chiller is excessively increased, and the closed solidification loop is not divided into four, the shrinkage cavity naturally occurs. It is, therefore, necessary to pay attention to the shrinkage cavity. When the feeder head is used, the feeder heads are constructed at four places of the above plate, and the closed solidification loop may be divided into four.

The shape coefficient of whether the shrinkage cavity occurs or not is naturally changed when containing elements such as Cr and Mo for promoting the shrinkage cavity, or conversely, according to the amount of C preventing the shrinkage cavity. Also, the shape coefficient is changed depending on, for example, the strength (correctly, the strength of a mold at a high temperature) of the mold, and the rigidity of a mold frame. The value of the shape coefficient for determining the shrinkage cavity is preferably determined by considering these conditions. However, in the case of an organic self-hardening mold generally used, the experiment of the present inventors shows that the shape coefficient of about 8 needs only to be used. Even in flake graphite cast iron, the existence or nonexistence of the shrinkage cavity can be determined by the shape coefficient to construct a measure so as to prevent the shrinkage cavity from occurring.

To summarize the description, a first aspect of the present invention provides a method for predicting shrinkage cavity in an iron casting, the method comprising: determining a shape coefficient which is a value obtained by dividing a sum of two long sides by a remaining short side from a shape of a casting product; and confirming whether or not the shape coefficient is 8 or more to predict occurrence of the shrinkage cavity.

A second aspect of the present invention provides a method for predicting shrinkage cavity in an iron casting, the method comprising: determining a shape coefficient of each of closed elliptical loops in a solidification distribution chart obtained from a temperature distribution or a solidification time distribution in a solidification of a casting product; and confirming whether or not the shape coefficient is 8 or more to predict occurrence of the shrinkage cavity in each of the closed elliptical loops.

A third aspect of the present invention provides the method for predicting shrinkage cavity according to the second aspect, wherein the size of the elliptical loop is measured on a screen using the solidification distribution chart obtained from the temperature distribution or the solidification time distribution due to a solidification simulation, thereby to calculate the shape coefficient.

A fourth aspect of the present invention provides the method for predicting shrinkage cavity according to the second aspect, wherein the shape coefficient is calculated from the number in X, Y and Z directions of elements constituting the elliptical loops divided by mesh cutting by use of the solidification distribution chart obtained from the temperature distribution or the solidification time distribution due to a solidification simulation.

A fifth aspect of the present invention provides a method for predicting shrinkage cavity in an iron casting, the method comprising: dividing a product using a chiller or a feeder head or using the chiller and the feeder head together when a shape coefficient is more than 8 to set the shape coefficient to 8 or less.

A sixth aspect of the present invention provides the method for predicting and preventing shrinkage cavity according to any of the first to fifth aspects, wherein the shape coefficient of whether the shrinkage cavity occurs or not is determined by components of the casting, a property of a mold and a cast position.

### Effect of the Invention

The present invention founds a new concept of a shape coefficient, and can use the shape coefficient to simply predict occurrence of the shrinkage cavity with extremely high accuracy. Even when the casting components, the type of the mold, the cast position and the like are different, the occurrence of the shrinkage cavity can be predicted by the shape coefficient. Furthermore, when the occurrence of the shrinkage cavity is predicted, the occurrence of the shrinkage cavity can be logically prevented by using effectively the chiller or the feeder head. Therefore, the present invention has effects such as the reduction of defective fraction in the iron casting, the improvement in yield and the shortening of delivery time, and can produce spheroidal graphite cast iron efficiently at low cost.

### Brief Description of Drawings

FIGS. 1A, 1B, 1C, 1D, 1E, 1F and 1G describe the shape approximation of a casting product.
FIG. 2 is a graph showing the relationship between a shape coefficient of a rectangular parallelepiped and shrinkage cavity.
FIG. 3 is a graph showing the relationship between a shape coefficient of a disc-shaped object and shrinkage cavity.
FIG. 4 is a graph showing the relationship between a shape coefficient of a cylindrical body and shrinkage cavity.
FIG. 5 is a graph showing the relationship between shape coefficients of rectangular parallelepipeds in different cast positions and shrinkage cavity.
FIG. 6 is a graph showing the relationship between shape coefficients of rectangular parallelepipeds of different molten iron components and shrinkage cavity.
FIG. 7 is a graph showing the relationship between shape coefficients of rectangular parallelepipeds and shrinkage cavity in a case of using different molds.
FIG. 8 shows an example predicting shrinkage cavity in a computer simulation.
FIG. 9 shows an example of a section in which elliptical loops exist.
FIG. 10 shows a dialog for measuring a width (w), a length (1) and a thickness (t_{MS}).
FIG. 11 shows an example of a section in which elliptical loops exist.
FIG. 12 shows an example of elliptical loops of a solidification distribution chart.
FIG. 13 shows an example of a cube circumscribed to elliptical loops.
FIG. 14 shows a dialog for automatically calculating a shape coefficient.
FIG. 15 shows a method for constructing a chiller to prevent shrinkage cavity.
FIG. 16 shows a method for constructing a feeder head to prevent shrinkage cavity.
FIG. 17 shows an example using a mistake chiller.
FIG. 18 shows an example using a correct chiller.
FIG. 19 is a flow chart of a method for predicting and preventing shrinkage cavity in an iron casting product.

### Best Mode for Carrying Out the Invention

The above and other objects, aspects and advantages of the present invention will make apparent, to those skilled in the art with reference to the following detailed description in which the preferred specific examples suitable to the principle of the present invention are shown as embodiments and the accompanying drawings. As a matter of course, the present invention, which is described in the following detailed description, is not limited to the embodiments shown in the accompanying drawings.

Hereinafter, the present invention will be described in detail based on specific examples.

The present invention fundamentally uses a shape coefficient (F) determined as a value obtained by dividing the sum of two long sides by a remaining short side. As most understandable examples, in a case of a block having a casting shape of a rectangular parallelepiped, a value obtained by dividing the sum of a width (W) and length, (L) of the block by a thickness (T_{MS}: the shortest side of three sides) is a shape coefficient. The shape of a block having a shape other than the rectangular parallelepiped may be approximately considered to be the rectangular parallelepiped.

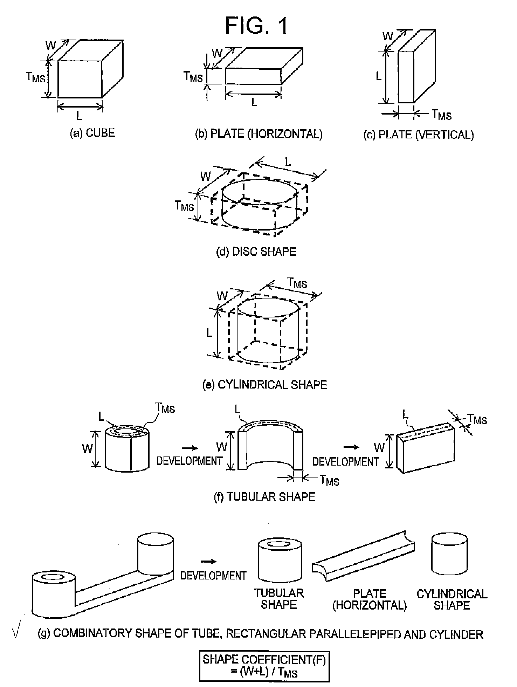

FIG. 1 shows examples in the case of determining a shape coefficient of each of castings having various shapes.

FIG. 1(a) shows a cube, and all of a width (W), length (L) and height (T_{MS}) become a length of one side of the cube. FIGS. 1(b) and 1(c) respectively show the case where a plate of a rectangular parallelepiped is horizontally placed and the case where the plate of the rectangular parallelepiped is vertically placed, with the width (W), the length (L) and the height (T_{MS}) being taken. FIG. 1(d) shows a disc having a height of less than a diameter. As for the shape of the disc, the diameter of the disc is considered to be the width (W) and the length (L), and the height (wall thickness) is considered to be T_{MS} to determine a shape coefficient. As shown in FIG. 1(e), in the case of a cylinder having a height of not less than a diameter, the diameter of the cylinder is considered to be the width (W) and the height (T_{MS}), and the height of the cylinder is considered to be the length (L). In the case of a doughnut-shaped tube shown in FIG. 1(f), a tube is developed to form a rectangular parallelepiped, and a shape coefficient is determined by respectively considering the height of the tube, the length of the circumference and the thickness of the tube to be the width (W), the length (L) and T_{MS}·

In FIG. 1(g) where the cylinder, the plate of the rectangular parallelepiped and the tube are combined, a cylindrical part, a plate part of a rectangular parallelepiped and a tubular part are respectively considered to be a cylinder, a plate and a tube. A shape coefficient of each of the parts may be determined by the above method, and it may be determined whether or not shrinkage cavity occurs in each of the parts. Also, a measure for preventing the shrinkage cavity to be described later may be performed for each of the parts.

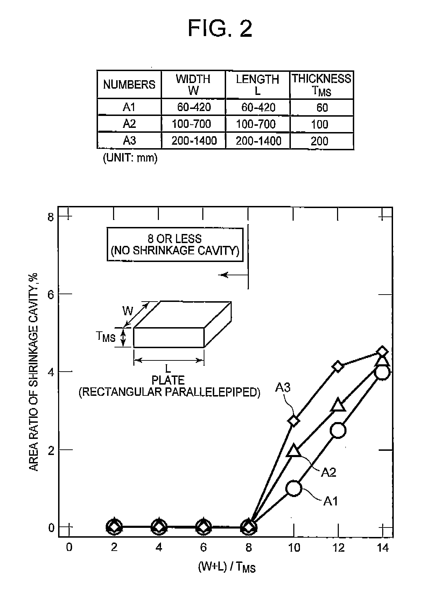

FIGS. 2, 3 and 4 show experimental results obtained by measuring the relationship between a shape coefficient ((L+W) T_{MS}) and an area rate of shrinkage cavity in test pieces having different shapes and sizes. An ordinary ductile iron casting (FCD600) is used for the material of the test pieces, and a furan self-hardening mold is used for a mold. In the experiment, the dimensions (width, length, thickness and diameter) of the test piece are changed as shown in Table of each of FIG. 2 to 4 to produce some test pieces shown by numbers A, B and C, and to measure the relationship between the shape coefficient and the area rate of the shrinkage cavity for each of the test pieces.

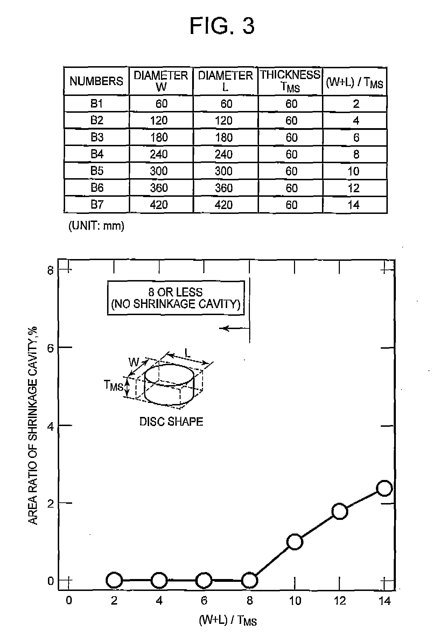

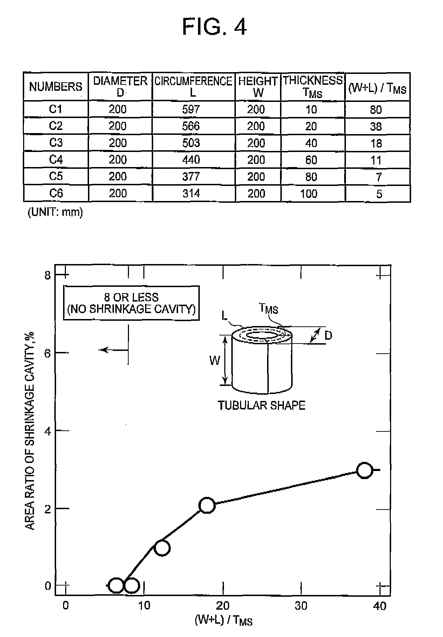

FIG. 2 shows a plate test piece of a rectangular parallelepiped, FIG. 3 shows a test piece of a disc shape, and FIG. 4 shows a test piece of a tubular shape. FIGS. 2, 3 and 4 show that the shrinkage cavity occurs when the shape coefficient ((L+W)/T_{MS}) is more than 8 and the shrinkage cavity does not occur when the shape coefficient is not more than 8. That is, FIGS. 2, 3 and 4 show that the occurrence of the shrinkage cavity can be predicted by the shape coefficient in spite of the shape. Herein, when the shape coefficient causing no occurrence of the shrinkage cavity is referred to as determination coefficient, FIGS. 2, 3 and 4 show that the determination coefficient is 8.

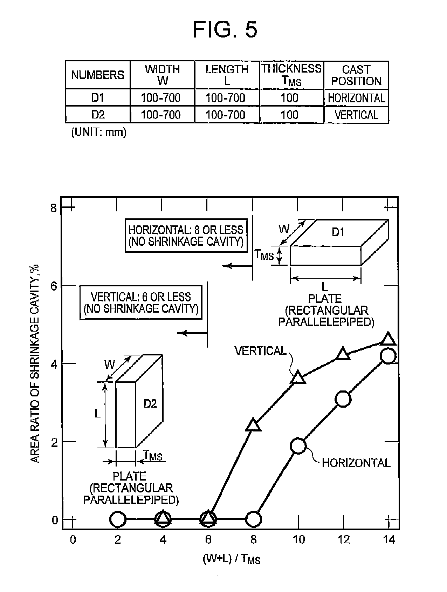

The present inventors also investigated whether or not there is the difference in the shape coefficients causing no occurrence of the shrinkage cavity depending on a cast position, i.e., how to place a casting, i.e., the determination coefficients. FIG. 5 shows experimental results of the relationship between the shape coefficient ((L+W/T_{MS}) and the area rate of the shrinkage cavity when the same casting (a plate of a rectangular parallelepiped as the test piece) is vertically and horizontally placed. The test piece is an ordinary ductile iron casting (FCD600).

As shown in FIG. 5, when the shape coefficient is 8 or less, the shrinkage cavity does not occur in the test piece (number D1 of Table) horizontally placed. However, when the shape coefficient is 6 or less, the shrinkage cavity does not occur in the test piece (number D2 of Table) vertically placed. Therefore, the determination coefficient is 8 in the test piece horizontally placed, and the determination coefficient is 6 in the test piece vertically placed.

The reason why the difference in the determination coefficients appears according to the cast position is believed to be based on the influence of gravity. That is, it is turned that the shape coefficient (determination coefficient) causing no occurrence of the shrinkage cavity changes even in the casting having the same component and size. Therefore, a shape coefficient value for determining the shrinkage cavity is preferably determined by considering these conditions.

Next, the present inventors also investigated whether or not there is the difference in the shape coefficients causing no occurrence of the shrinkage cavity when a ductile casting contains elements promoting the occurrence of the shrinkage cavity. Mo is a well-known element promoting the occurrence of the shrinkage cavity.

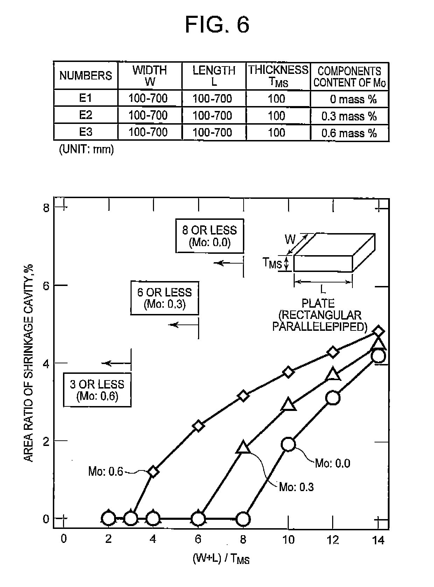

FIG. 6 shows experimental results of the relationship between the shape coefficient and the area rate of the shrinkage cavity for three test pieces (numbers E1, E2 and E3 of Table) having different contents of Mo.

The experiment results show that the shrinkage cavity does not occur in the ordinary ductile casting which does not contain Mo when the shape coefficient is not more than 8. The experiment results also show that the shrinkage cavity does not occur at the shape coefficient of not more than 6 when the ductile casting contains Mo of 0.3% by weight and at the shape coefficient of not more than 3 when the ductile casting contains Mo of 0.6% by weight. That is, it is clear that the inclusion of the elements promoting the occurrence of the shrinkage cavity changes the shape coefficient (determining coefficient) causing no occurrence of the shrinkage cavity. The value of the shape coefficient for determining the shrinkage cavity is preferably determined by considering these conditions.

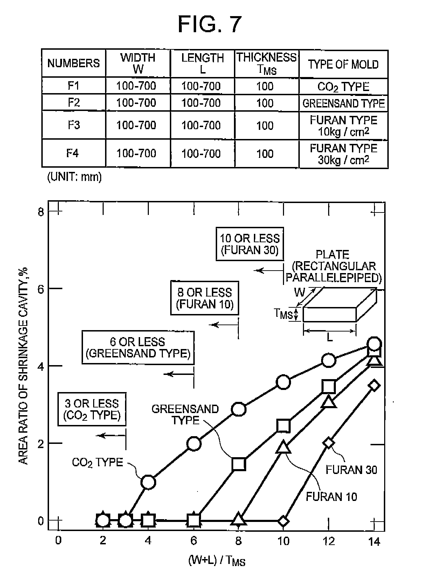

The present inventors also investigated whether there is the difference in the shape coefficients causing no occurrence of the shrinkage cavity, i.e., the determination coefficients when the type of the mold is different. FIG. 7 shows the relationship between the shape coefficient and the area rate of the shrinkage cavity when the type of the mold is different (the numbers F1, F2, F3 and F4 of Table).

A plate of a rectangular parallelepiped is used as the test piece in FIG. 7, and the shrinkage cavity does not occur when the shape coefficient is not more than 2 in a CO₂ type mold believed to have no high temperature strength. Next, the shrinkage cavity does not occur when the shape coefficient is not more than 6 in a greensand type mold having a low high temperature strength, when the shape coefficient is not more than 8 in a furan type mold having a sand strength of 10 kgf/cm² at a normal temperature, and when the shape coefficient is not more than 10 in a furan type mold having a sand strength of 30 kgf/cm² at a normal temperature. That is, FIG. 7 shows that the shape coefficient (determination coefficient) causing no occurrence of the shrinkage cavity is different according to the type of the mold. The value of the shape coefficient for determining the shrinkage cavity is preferably determined by considering these conditions.

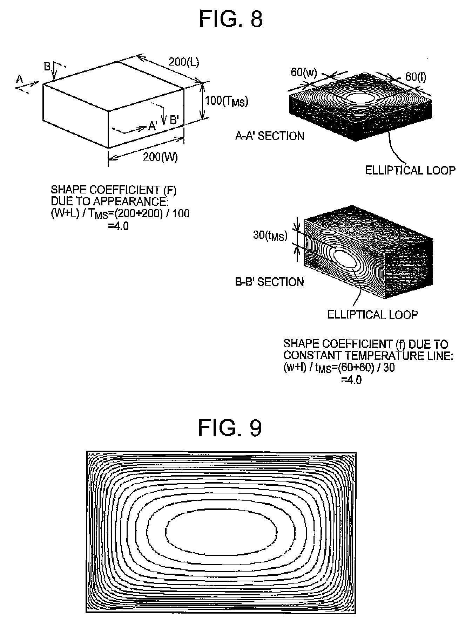

FIG. 8 shows an example predicting shrinkage cavity using a solidification simulation due to a computer.

In the solidification simulation, a solidification distribution chart is obtained from a temperature distribution or a solidification time distribution. A shape coefficient (f) can be calculated by respectively measuring dimensions of a width (w), length (1) and thickness (t_{MS}) from closed elliptical loops. As the elliptical loops, the innermost loop need not to be necessarily used, and the loops are preferably used to a last solidification part from a last half solidification part (the elliptical loop used in the following descriptionmeans the loops to the last solidification part from the last half solidification part).

In the example shown in FIG. 8, the shape coefficient (F) determined from the shape of the test piece is (200 + 200) /100 =4, and the shape coefficient (f) determined from the elliptical loop due to the solidification simulation is also (60 + 60) /30 = 4. This result shows that the shape coefficient (f) determined from the elliptical loop of the solidification distribution chart obtained from the solidification simulation is a value approximated to the shape coefficient (F) determined from the shape of the test piece. That is, the shrinkage cavity can be predicted based on the shape coefficient from the solidification distribution chart by the solidification simulation due to the computer. When the product shape is particularly complicated, the shrinkage cavity is effectively predicted based on such a solidification simulation. When the complicated shapes are combined, it is turned out that a shape coefficient (f) of the elliptical loop occurring for each of the shapes is determined and the shrinkage cavity may be predicted from the shape coefficient (f) thus determined.

### (1) One Example of Methods for Measuring Width (w), Length (1) and Thickness (t_{MS}) due to Solidification Simulation

There is shown an example of methods for measuring a width (w), length (1) and thickness (t_{MS}) required for calculating a shape coefficient due to a solidification simulation in the present invention.

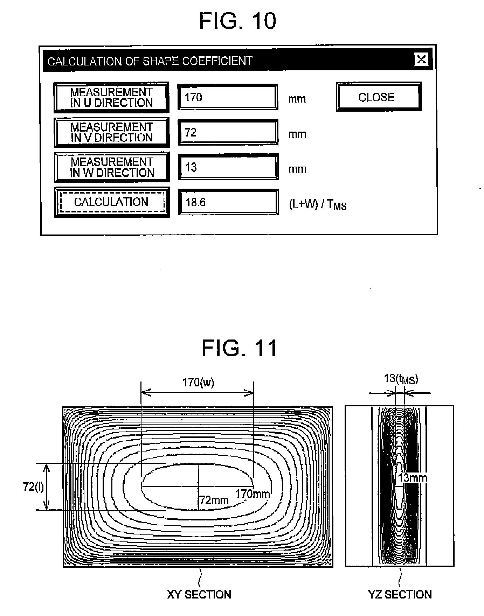

In the solidification simulation, the solidification distribution chart is obtained from the temperature distribution or the solidification time distribution. First, as shown in FIG. 9, a section in which the elliptical loop exists is displayed for measuring the closed elliptical loop from the obtained distribution chart. Next, the size of the elliptical loop is measured. The dialogs of U, V and W shown in FIG. 10 in measuring the size are used. If "Measurement in U direction" of this dialog is pushed on the screen, for example, the loop of an XY section viewed from an X direction is displayed. If "Measurement in V direction" is pushed, for example, the loop of a YZ section viewed from a Y direction is displayed. If "Measurement in W direction" is pushed, for example, the loop of a ZX section viewed from a Z direction is displayed. In the measurement of 1, w and t_{MS} of the elliptical loop, a measurement starting position and a measurement end position are specified on the screen using a mouse or the like. The measurement in the thickness direction of the section displayed is performed by changing the section to be displayed using the dialog of FIG. 10, as shown in FIG. 11. At this time, the measurement in three directions is required. However, since it is unknown which direction is the width (w), the length (1) and the thickness (t_{MS}), the system automatically considers that the shortest length is the thickness t_{MS} from the measuring results of three directions. The system considers and determines that the others are the width (w) and the length (1). When the measurement in three directions is completed, the shape coefficient is calculated by clicking a "calculation" button. A calculated value is displayed on a shape coefficient column of FIG. 10.

### (2) One Example of Automatic Calculation of Shape Coefficient Due to Solidification Simulation

There is shown an example of methods for automatically calculating a shape coefficient due to simulation.

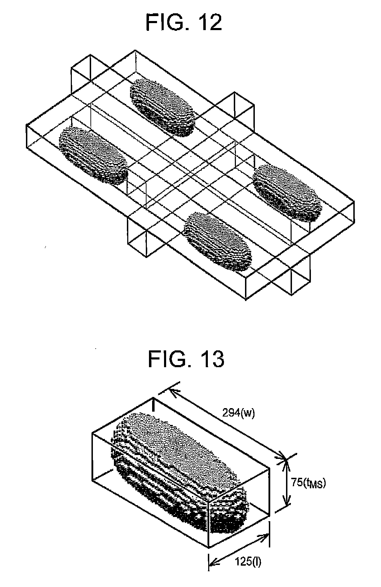

In the solidification simulation, a solidification distribution chart is obtained from a temperature distribution or a solidification time distribution. The total frame number (a value for dividing how many times to the solidification end from the solidification start) and the display frame number (a numerical value for displaying an island (loop) of what position of times divided to the solidification end from the solidification start) are specified for obtaining (displaying) an arbitrary closed elliptical loop from the solidification distribution chart. Therefore, some islands shown in FIG. 12 are obtained. These islands mean an isothermal distribution or an equal solidification time distribution. These islands are composed by elements divided by the mesh cutting for the solidification simulation. As shown in FIG. 13, a rectangular parallelepiped circumscribed to this island is calculated by counting the number of elements in each of X, Y and Z directions. A width (w), a length (1) and a thickness (t_{MS}) are determined from the rectangular parallelepiped, and the shape coefficient is automatically calculated.

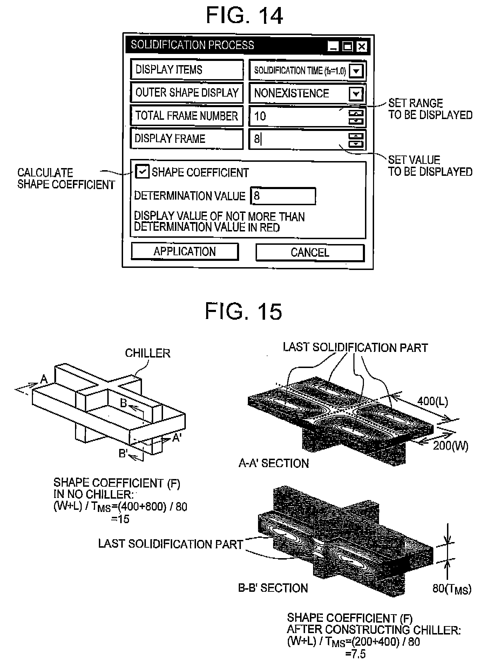

Finally, the shape coefficient of each of islands can be determined by clicking a calculation button shown in FIG. 14. For example, it can be determined whether or not the shrinkage cavity occurs in a portion by coloring blue to red for the shape coefficient and viewing whether the shape coefficient is high or low.

Of course, the present invention can predict the shrinkage cavity. However, the present invention also proposes a method for preventing the shrinkage cavity, and an example thereof is shown below.

FIG. 15 shows a construction example of a chiller preventing the occurrence of the shrinkage cavity.

Since the test piece is an ordinary ductile iron (FCD600), and has a cast position horizontally placed, the determination coefficient is 8. However, since the shape coefficient of the test piece is (400 + 800)/80 = 15, exceeding 8 in the example of FIG. 15, the shape causes the occurrence of the shrinkage cavity. The chillers are constructed crosswise at the upper and lower sides of the test piece, and the solidification distribution chart was determined by the solidification simulation. An A-A' section and a B-B' section in FIG. 15 show that the closed elliptical loop is divided into four. That is, four rectangular parallelepipeds divided by the chiller may be believed to solidify independently and respectively. Therefore, since the shape coefficient of the divided rectangular parallelepiped is (400 + 200)/80 = 7.5, that is, above 8, the occurrence of the shrinkage cavity can be prevented.

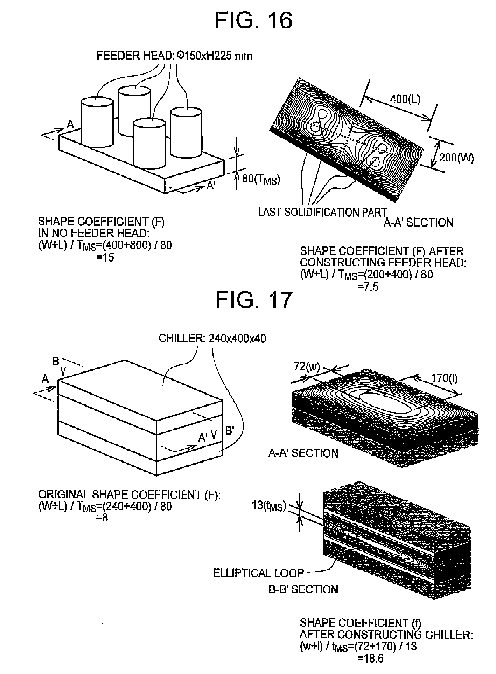

FIG. 16 shows one of construction examples of a feeder head for preventing the occurrence of the shrinkage cavity.

Since the test piece having the same material and dimensions as those of the case of FIG. 15 is used, the shape coefficient of the test piece is 15, and the shape causes the original occurrence of the shrinkage cavity. Four feeder heads having a diameter of 150 mm and a height of 225 mm were constructed on the test piece, and the solidification distribution chart is determined by the solidification simulation. AnA-A' section of FIG. 16 shows that the closed elliptical loop is divided into four. That is, even in this case, four rectangular parallelepipeds divided by the feeder head may be believed to solidify independently and respectively. A shape coefficient (F) of the divided rectangular parallelepiped is 7.5, and the occurrence of the shrinkage cavity can be prevented.

When the feeder head is generally constructed, it is considered that the closed elliptical loop which is the last solidification part must be confined in the feeder head. Therefore, the feeder head larger than the product is often erected. However, it is understood from the viewpoint of the shape coefficient that even a small feeder head is sufficient as long as the closed elliptical loop of the solidification distribution chart obtained by the solidification simulation is divided and the shape coefficient of each of the parts divided by the feeder head or the shape coefficient of the divided elliptical loop is a value which does not exceed the determination coefficient.

The chiller is generally used for preventing the shrinkage cavity. However, many wrong usages, i.e., many usages promoting the occurrence of the shrinkage cavity exist. In the present invention, the right usage of the chiller, i.e., a method for logically preventing the occurrence of the shrinkage cavity has been found by focusing attention on the shape coefficient.

FIG. 17 shows an example of a wrong usage of the chiller.

Since the shape coefficient (F) of the test piece is (240 + 400) /80 = 8, the shape does not essentially cause the shrinkage cavity. However, a method is often adopted in the casting spot, which constructs feeder heads 10a and 10b at the upper and lower sides of the test piece and prevents the shrinkage cavity. In the method, the shrinkage cavity may increase by contrast. When the solidification distribution chart is determined by the solidification simulation in a state where the feeder heads 10a and 10b abut on the upper and lower sides, the shape coefficient (f) of the closed elliptical loop is (72 + 170) /13 = 19 as shown in an A-A' section and a B-B' section of FIG. 17, which shows that the shrinkage cavity occurs in spite of constructing the feeder head.

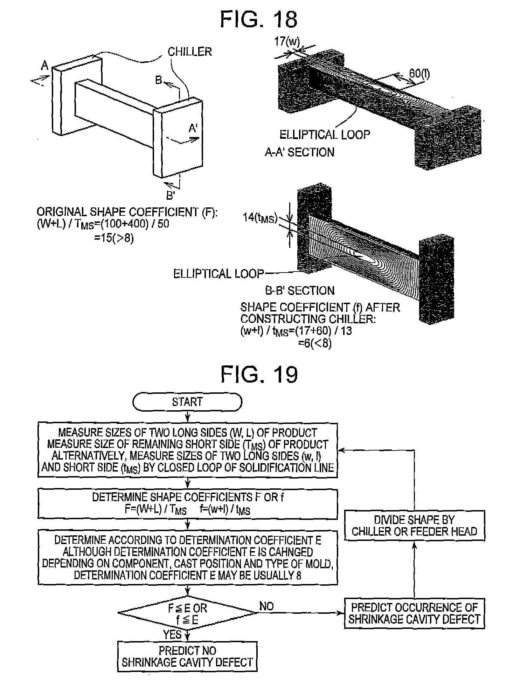

On the other hand, FIG. 18 shows the right usage of the chiller.

The shape coefficient (F) of the test piece is (100+400)/50 = 10, and the shape causes the occurrence of the shrinkage cavity. The feeder heads 10a and 10b are attached to both the sides of the test piece, and similarly, the solidification distribution chart is determined by the solidification simulation. As shown in the A-A' section and the B-B' section, the shape coefficient (f) of the closed elliptical loop is (17 + 60)/13 = 6, and the shrinkage cavity does not occur. Therefore, the sections show that the shrinkage cavity can be prevented by the idea based on the shape coefficient in constructing the chiller.

FIG. 19 collectively shows a flow chart of the method for predicting and preventing the shrinkage cavity in the present invention.

The method for predicting and preventing the shrinkage cavity of the present invention includes the following steps (1) to (6).

(1) The dimensions of two long sides (W, L) and remaining short side (T_{MS}) of the casting are measured. Alternatively, two long sides (w, 1) of the closed elliptical loop and remaining short side (t_{MS}) are calculated by the computer simulation.

(2) The shape coefficient [F = (W + L)/T_{MS}] is determined from W, L and T_{MS}. Alternatively, the shape coefficient [f = (w + l)/t_{MS}] is determined from w, 1 and t_{MS}.

(3) When the shape coefficient (F or f) is smaller than the determination coefficient (E, generally 8), the shrinkage cavity is determined as "nonexistence".

(4) When the shape coefficient (F or f) is larger than the determination coefficient, the shrinkage cavity is determined as "existence".

(5) When the shrinkage cavity is determined as "existence", the product is divided by the chiller or the feeder head.

(6) The shape coefficient (F or f) is made smaller than the determination coefficient by repeating the processes (1) to (5).

The present invention founds a new concept of a shape coefficient, and can use the shape coefficient to simply predict the occurrence of the shrinkage cavity with extremely high accuracy. Even when the casting components, the type of the mold, the cast position and the like are different, the occurrence of the shrinkage cavity can be predicted by the shape coefficient. Furthermore, when the occurrence of the shrinkage cavity is predicted, the occurrence of the shrinkage cavity can be logically prevented by using effectively the chiller or the feeder head. Therefore, the present invention has effects such as the reduction of defective fraction in the iron casting, the improvement in extraction rate and the shortening of delivery time, and can produce the spheroidal graphite cast iron efficiently at low cost.

### Industrial Application

Since the present invention can predict whether or not the shrinkage cavity is formed from the shape of the casting in the iron casting before the cast, and can previously prevent the shrinkage cavity, the present invention is useful in the iron casting technique.

## Claims

1. A method for predicting shrinkage cavity in an iron casting, the method comprising:
determining a shape coefficient which is a value obtained by dividing a sum of two long sides by a remaining short side from a shape of a casting product; and
confirming whether the shape coefficient is not more than 8 or not to predict occurrence of the shrinkage cavity.

2. A method for predicting shrinkage cavity in an iron casting, the method comprising:
determining a shape coefficient of each of closed elliptical loops in a solidification distribution chart obtained from a temperature distribution or a solidification time distribution in a solidification of a casting product; and
confirming whether or not the shape coefficient is 8 or more to predict occurrence of the shrinkage cavity in each of the closed elliptical loops.

3. The method for predicting shrinkage cavity according to claim 2, wherein the size of the elliptical loop is measured on a screen using the solidification distribution chart obtained from the temperature distribution or the solidification time distribution due to a solidification simulation, thereby to calculate the shape coefficient.

4. The method for predicting shrinkage cavity according to claim 2, wherein the shape coefficient is calculated from the number in X, Y and Z directions of elements constituting the elliptical loops divided by mesh cutting by use of the solidification distribution chart obtained from the temperature distribution or the solidification time distribution due to a solidification simulation.

5. A method for predicting shrinkage cavity in an iron casting, the method comprising:
dividing a product using a chiller or a feeder head or using the chiller and the feeder head together when the shape coefficient is more than 8 to set the shape coefficient to 8 or less.

6. The method for predicting and predicting shrinkage cavity according to any of claims 1 to 5, wherein the shape coefficient of whether the shrinkage cavity occurs or not is determined by a component of the casting, a property of a mold and a cast position.
